**Europäisches Patentamt**

**European Patent Office**

**Office européen des brevets**

(19)

(11) **EP 0 705 548 A2**

(12) **DEMANDE DE BREVET EUROPEEN**

(43) Date de publication:
**10.04.1996 Bulletin 1996/15**

(51) Int Cl.⁶: **A47B 53/00**, B65G 1/10

(21) Numéro de dépôt: **95402217.4**

(22) Date de dépôt: **04.10.1995**

(84) Etats contractants désignés:
**BE CH DE ES FR GB IT LI LU MC NL**

(30) Priorité: **07.10.1994 FR 9412131**

(71) Demandeurs:
- **SOCIETE DACOTA SUD OUEST SA**
  **F-31340 Villemur sur Tarn (FR)**
- **Daigre, Jean Claude**
  **F-31770 Colomiers (FR)**

- **Cottini, Berthe**
  **F-31770 Colomiers (FR)**

(72) Inventeur: **Daigre, Jean-Claude**
**F-31770 Colomiers (FR)**

(74) Mandataire: **Ravina, Bernard**
**RAVINA S.A.**
**24, boulevard Riquet**
**F-31000 Toulouse (FR)**

(54) **Structure de module de rangement, module de rangement et ensemble de rangement réalisé par accolement de plusieurs structures de modules et/ou de plusieurs modules**

(57) La structure de module de rangement est constituée essentiellement par un caisson de rangement arrière (3), fixe avec ouverture frontale et par au moins un tronçon médian (5A), (7A) de rail de guidage destiné à recevoir au moins un caisson de rangement (4) avant, mobile face à l'ouverture frontale du caisson arrière. Le module rangement est formé par une structure de rangement recevant des tronçons de rails amovibles (5B), (7B) prolongeant les tronçons (5A), (7A). L'ensemble de rangement est formé par accolement de plusieurs structures de rangement réunies les unes aux autres par des pièces de rail, chaque pièce de rail étant transversale au plan de jointement des deux structures consécutive et étant fixée de manière amovible à l'une et l'autre structure dans le prolongement de leur tronçon (5A), ou (7A).

Fig.4

## Description

La présente invention à pour objet une structure de module de rangement, un module de rangement, et un ensemble de rangement réalisé par juxtaposition selon une direction rectiligne de plusieurs structures de module ou bien de plusieurs modules selon l'invention.

On connaît des modules de rangement formés chacun par un socle horizontal de contour rectangulaire ou carré, constituant piétement, sur la zone arrière duquel est monté un caisson fixe de rangement tandis que sur la zone avant est monté sur rails au moins un caisson mobile dont la largeur maximale est donnée par la formule suivante :

$$l = L/(n+1)$$

ou l est la largeur maximale de chaque caisson mobile,
L est la largeur du caisson arrière fixe,
et n est le nombre de caissons mobiles.

Ainsi lorsque les caissons mobiles sont accolés les uns aux autres un intervalle égal au moins à la largeur d'un caisson mobile subsiste sur les rails ce qui permet par déplacement des caissons sur ces derniers, l'accès à tout le volume interne de rangement du caisson fixe arrière. Généralement ces modules de rangement comprennent un caisson fixe arrière et deux caissons mobiles avant.

Les modules de rangement tels que définis peuvent par accolement les uns contre les autres former des ensembles de rangement qui peuvent s'étendre de manière rectiligne sur une longueur relativement importante L'inconvénient de tels ensembles réside dans la perte de volume de rangement. En effet, à chaque module de rangement correspond un intervalle libre alors que tous les intervalles libres sauf un, de l'ensemble de rangement, pourraient être occupés par un caisson mobile de rangement.

La présente invention à pour objet de résoudre le problème sus évoqué en mettant en oeuvre une structure de module de rangement qui puisse évoluer vers un module de rangement ou bien, en relation de juxtaposition avec des structures identiques, puisse former la structure d'un ensemble de rangement présentant en partie avant un rail au moins s'étendant de manière continue d'une des extrémités à l'autre de l'ensemble et sur lequel les caissons mobiles peuvent coulisser d'une structure de module à l'autre grâce à quoi ledit ensemble peut recevoir un nombre important de caissons tel qu'un seul intervalle libre demeure sur le rail.

A cet effet la structure de module de rangement se caractérise essentiellement en ce qu'elle est constituée par un caisson de rangement arrière, de forme parallélépipédique, fixe, avec ouverture frontale et par au moins un tronçon médian de rail de guidage destiné à recevoir au moins un caisson de rangement avant, mobile face à l'ouverture frontale du caisson arrière. Le tronçon médian de rail de guidage s'étend de préférence de manière horizontale parallèlement à l'ouverture du caisson arrière. Ce tronçon médian de rail peut être fixé en partie haute de la structure ou bien en partie basse et, dans ce cas, il sera avantageusement fixé sur la partie avant d'un socle d'appui au sol que comporte la structure. Le caisson arrière de la structure sera monté en fixation sur la zone arrière de ce socle.

En considérant les plans géométriques latéraux verticaux contenant les flans latéraux de la structure, ces plans géométriques et ces flans latéraux étant perpendiculaires au plan de l'ouverture du caisson arrière, le tronçon médian de rail, par au moins l'une de ses extrémités est écarté des dits plans géométriques et est disposé entre ces derniers. De préférence, les deux extrémités de ce tronçon de rail sont écartées des plans géométriques latéraux et disposées entre ces derniers.

Préférentiellement, la structure de module de rangement comporte un tronçon médian de rail inférieur fixé sur le socle d'appui au sol et un tronçon médian de rail supérieur monté en fixation en partie haute de ladite structure. Ce tronçon de rail supérieur peut être fixé sur le caisson arrière, préférentiellement sur la paroi supérieure horizontale de ce dernier.

La structure de rangement peut recevoir de part et d'autre du tronçon de rail médian, deux tronçons de rail latéraux, amovibles, disposés dans le prolongement du tronçon de rail médian et en aboutement avec ce dernier. De cette façon, la structure évolue vers un module de rangement qui comporte un caisson arrière fixe de rangement avec ouverture frontale, en avant duquel est monté au moins un caisson avant de rangement lequel est mobile face à l'ouverture frontale du caisson arrière et est guidé dans son déplacement par au moins un rail de guidage constitué par un tronçon de rail fixe médian et par deux tronçons de rail latéraux, amovibles, montés dans le prolongement du tronçon médian de part et d'autre de ce dernier. De préférence les tronçons latéraux comportent chacun suivant leur extrémité la plus éloignée du tronçon médian une butée pour limiter le mouvement et s'opposer à l'extraction des caissons avant de leur rail.

Ce rail de guidage, préférentiellement horizontal, peut s'étendre en partie haute du module de rangement parallèlement à l'ouverture du caisson arrière, auquel cas le ou les caissons avant est ou sont suspendus à ce rail. Le rail de guidage peut aussi être disposé en partie basse du module de rangement. Dans ce cas le ou les caissons avant est ou sont portés par le rail de guidage. On peut avantageusement prévoir deux rails de guidage dont un se développe en partie supérieure du module et l'autre en partie inférieure. Selon cette autre forme de réalisation, le ou les caissons avant est ou sont, soit suspendus au rail supérieur et guidés seulement par le rail inférieur, soit portés par le rail inférieur et guidés seulement par le rail supérieur.

Par juxtaposition de plusieurs structures de rangement selon l'invention, il est possible de former également un ensemble de rangement. Cet ensemble de rangement se caractérise essentiellement en ce qu'il est constitué par au moins deux structures accolées l'une à l'autre et maintenues en fixation l'une à l'autre par au moins une pièce de rail disposée entre le tronçon médian de rail de l'une et le tronçon de rail médian de l'autre, dans leur prolongement, et en aboutement avec ces derniers, ladite pièce de rail étant transversale au plan de jointoiement entre les dites structures et étant fixée à ces dernières, ledit ensemble étant équipé d'au moins un caisson mobile avant, d'au moins un tronçon latéral gauche de rail fixé à la structure de module d'extrémité gauche dans le prolongement du tronçon médian de rail de ladite structure, en aboutement avec ce dernier et à sa gauche et d'au moins un tronçon latéral droit de rail fixé à la structure de module d'extrémité droite dans le prolongement du tronçon médian de rail de ladite structure, en aboutement avec ce dernier et à sa droite.

Grâce à cette disposition, les caissons mobiles ou certains d'entre eux peuvent passer d'une structure de module à l'autre et l'ensemble peut recevoir un nombre élevé de caissons mobiles. Par ailleurs, le mode de liaison des structures l'une à l'autre tel qu'il vient d'être défini assure la parfaite continuité des rails de guidage et écarte tout risque de décalage au niveau de la jonction des tronçons de rail avec les pièces de rail.

D'autres avantages et caractéristiques de l'invention apparaîtront à la lecture de la description d'une forme préférée de réalisation donnée à titre d'exemple non-limitatif en se référant aux dessins annexés en lesquels :

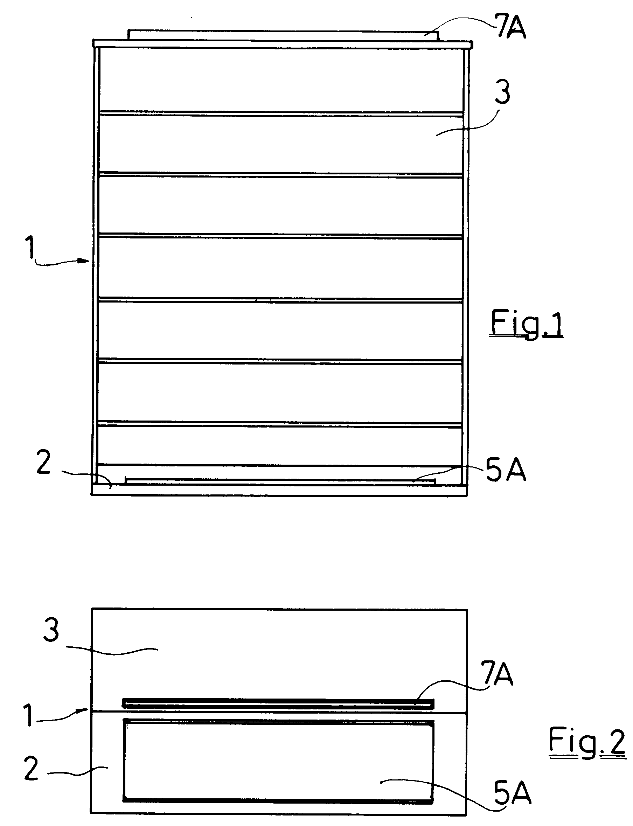

- la figure 1 est une vue de face d'une structure de module selon la forme préférée de réalisation,

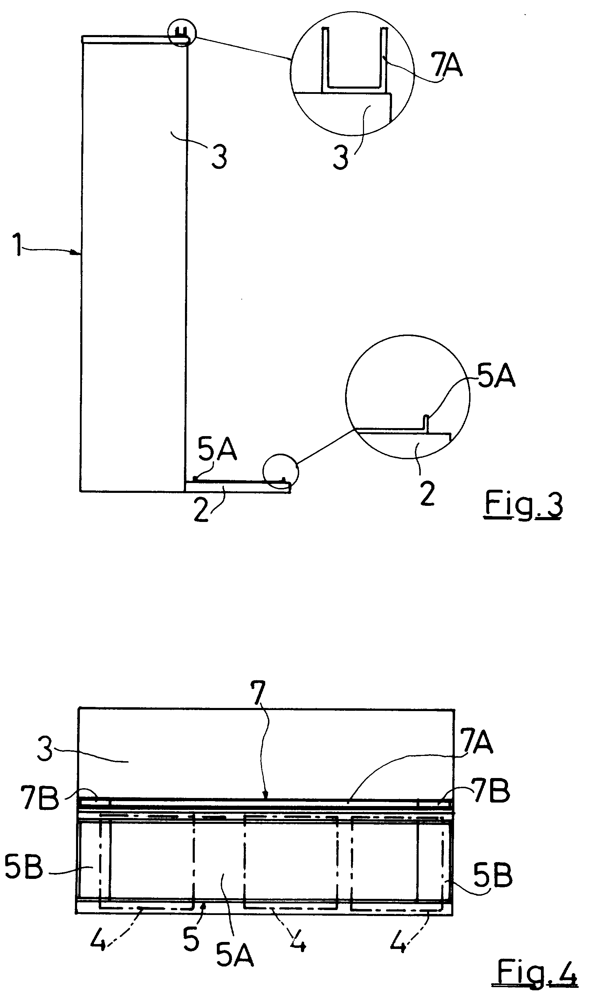

- la figure 2 est une vue de dessus d'une structure de module selon la forme préférée de réalisation,
- la figure 3 est une vue de profil d'une structure de module selon la forme préférée de réalisation,

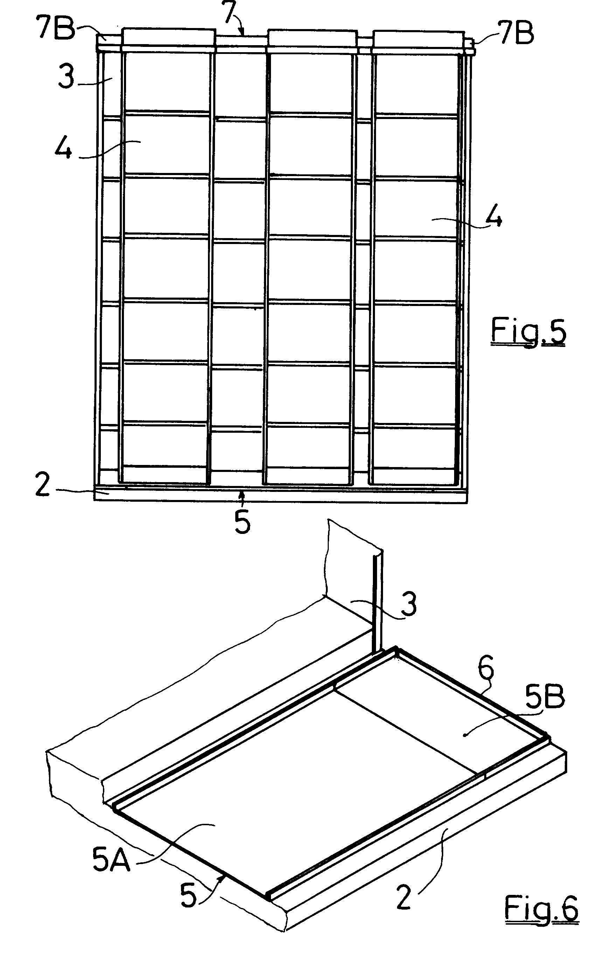

- la figure 4 est une vue de dessus d'un module selon une forme préférée de réalisation,
- la figure 5 est une vue de face d'un module selon la forme préférée de réalisation,
- la figure 6 est une vue partielle en perspective d'un rail inférieur,

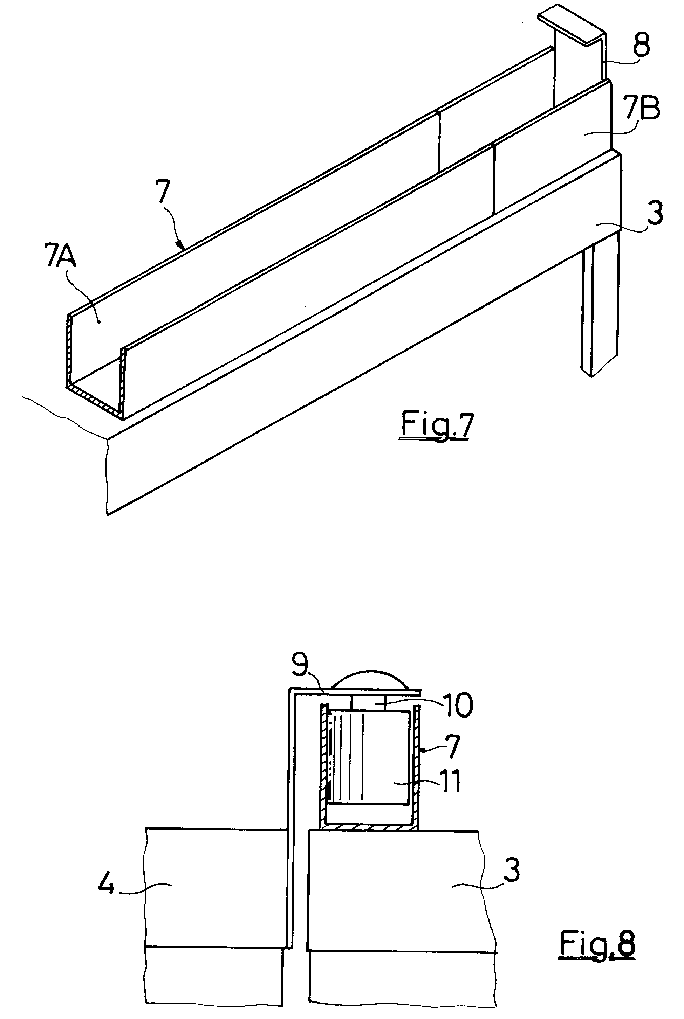

- la figure 7 est une vue partielle en perspective d'un rail supérieur,
- la figure 8 montre le guidage supérieur des caissons avant,
- la figure 9 est une vue partielle en perspective de la liaison inférieure de deux structures accolées l'une à l'autre,

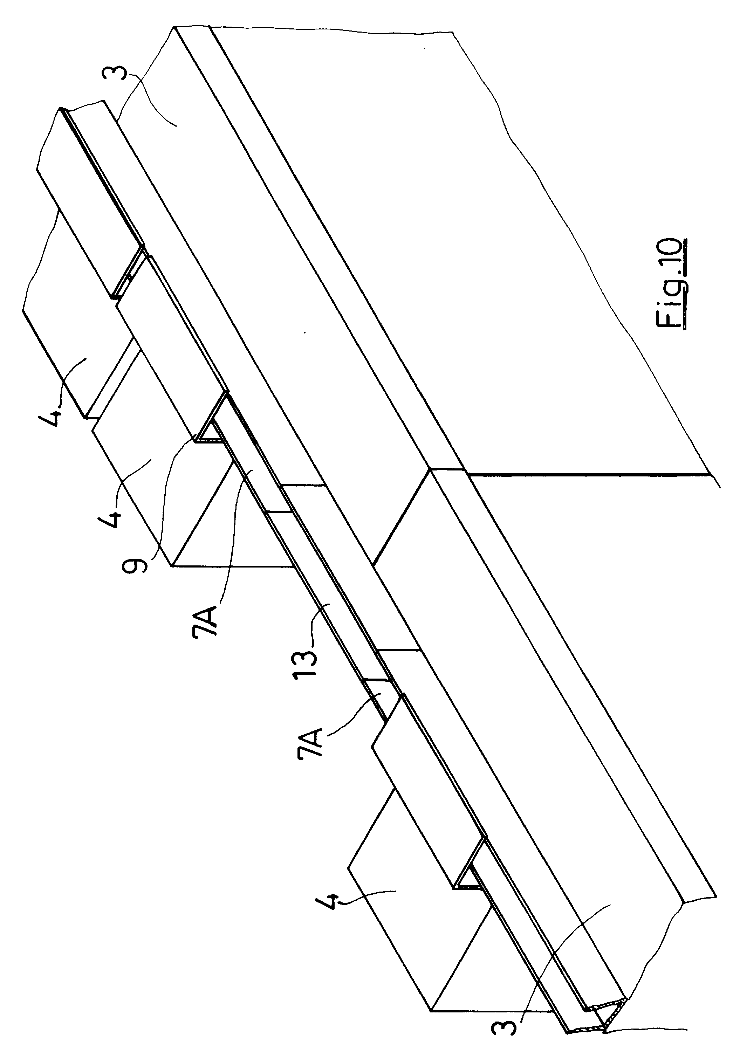

- la figure 10 est une vue partielle en perspective de la liaison supérieure de deux structures accolées l'une à l'autre.

Telle que représentée, la structure de module 1 selon l'invention, comprend un socle 2 de contour rectangulaire sur la zone arrière duquel est dressé verticalement un caisson arrière 3 de rangement de forme parallélépipèdique dont la largeur correspond sensiblement à la longueur du socle 2. Ce caisson arrière est formé par deux parois latérales, une paroi verticale arrière et une paroi supérieure horizontale. Ces trois parois, avec le socle, déterminent un volume interne pourvu d'une ouverture frontale d'accès. Parallèlement à l'ouverture frontale d'accès, la structure comprend en fixation sur la face supérieure du socle 2, un tronçon médian 5A de rail inférieur et en fixation sur la face supérieure de la paroi supérieure horizontale du caisson arrière un tronçon médian 7A de rail supérieur. Le tronçon de rail médian 5A est écarté par ses extrémités des côtés latéraux du contour rectangulaire que présente la face supérieure du socle 2, ces côtés latéraux étant ceux perpendiculaires au plan de l'ouverture frontale d'accès. Le tronçon de rail médian 7A est écarté par ses extrémités des côtés latéraux du contour rectangulaire que présente la face supérieure de la paroi supérieure, ces côtés latéraux étant ceux perpendiculaires au plan de l'ouverture frontale d'accès. A partir de la structure telle que définie, il est possible de former un module de rangement constituant à lui seul un meuble de rangement.

Face à l'ouverture frontale du caisson arrière 3, le module comprend un ou plusieurs caissons avant 4 mobiles sur un rail inférieur 5 solidaire de la partie avant du socle 2, plus précisément de la face supérieure de ce dernier. Ce rail de guidage s'étend parallèlement à la face frontale du caisson 3 arrière et comprend le tronçon de rail médian 5A fixé sur le socle par tout moyen connu et deux tronçons de rail latéraux 5B amovibles montés dans le prolongement du tronçon médian de part et d'autre de ce dernier. A titre d'exemple, les tronçons de rail latéraux 5B sont fixés par vis à la paroi supérieure du socle 2. Chaque tronçon de rail latéral, suivant son extrémité la plus éloignée du tronçon médian, comporte une butée 6. Préférentiellement, les tronçons médian 5A et latéraux 5B du rail de guidage 5 porté par le socle 2, sont chacun constitués par une paroi rectangulaire dont les bords parallèles à l'ouverture frontale du caisson arrière 3 sont pliés à angle droit vers le haut. La butée 6 de chaque tronçon latéral 5B est formée par repliement à angle droit vers le haut du côté transversal correspondant de la paroi à partir de laquelle ledit tronçon est constitué.

Préférentiellement, chaque caisson 4 est monté sur des organes de roulement non représentés assujettis à rouler sur le rail 5 tel que décrit et à coopérer en guidage avec ce dernier. Les organes de roulement par exemple au nombre de quatre forment un polygone de sustentation suffisamment important pour assurer un équilibre stable du caisson mobile. La butée 6 de chaque tronçon 5B est prévue sur la trajectoire des organes de roulement.

Selon la forme préférée de réalisation, chaque caisson avant mobile 4 coopère également en guidage avec un rail supérieur 7 monté en fixation en partie haute du caisson arrière 3 et s'étendant parallèlement à l'ouverture frontale de ce dernier. Ce rail 7, fixé de préférence sur la paroi supérieure du caisson arrière 3, comprend le tronçon de rail médian 7A fixé par tout moyen connu au caisson arrière et deux tronçons de rail latéraux 7B, montés de manière amovible sur la paroi supérieure du caisson 3 dans le prolongement du tronçon 7A de part et d'autre de ce dernier. Ces tronçons 7B comportent chacun suivant leur extrémité la plus éloignée du tronçon médian 7A, une butée 8 pour s'opposer à l'extraction des caissons avant 4. De préférence, les tronçons 7B sont fixés par vis à la paroi supérieure du caisson 3.

A titre d'exemple, les tronçons 7A et 7B sont constitués chacun par un profilé de section droite en U, les ailes du profilé étant tournées vers le haut. La butée 8 est formée par repliement vers le haut de la portion terminale correspondante de l'âme du profilé en U.

Avantageusement, chaque caisson de rangement 4 est équipé en partie supérieure d'une platine horizontale 9 s'étendant au-dessus du rail supérieur 7 de guidage, ladite platine horizontale 9, au-dessus dudit rail 7 étant équipée d'au moins un pivot vertical 10 sur lequel est monté de manière libre en rotation et fixe en translation un galet de roulement 11 assujetti à rouler dans le rail de guidage supérieur 7. La butée 8 est disposée sur la trajectoire des galets de roulement 11.

On vient de décrire un module de rangement dont les caissons avant sont portés et guidés face à l'ouverture du caisson arrière par le rail inférieur 5 et guidés seulement en partie supérieure par le rail supérieur 7, lequel en combinaison avec le galet, le pivot vertical et la platine s'oppose à leur basculement autour de leur base. En variante les caissons mobiles pourront être suspendus au rail supérieur et guidés seulement par le rail inférieur ce dernier ne jouant plus le rôle de rail porteur. Selon cette dernière forme de réalisation, le galet de roulement 11 sera monté sur un pivot horizontal solidaire d'une platine fixée au caisson mobile. Le rail 7 sera de forme adaptée à recevoir en suspension les caissons avant.

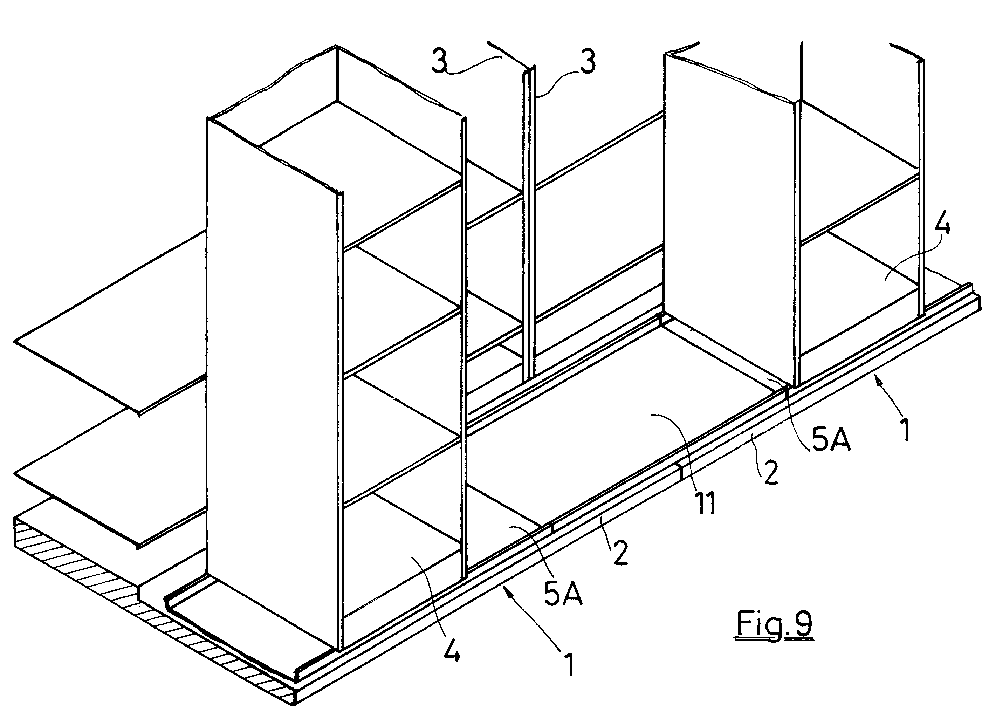

L'ensemble de rangement selon l'invention, tel que représenté en figure 9, est formé à partir de la juxtaposition et de la liaison de structures de module de rangement. Pour assurer la liaison entre les structures et assurer la jonction entre les tronçons médians de rail 5A, 7A sont prévues des pièces de rails additionnelles 12, 13. Les pièces 12 sont prévues pour assurer la jonction entre les tronçons médians 5A tandis que les pièces 13 sont prévues pour assurer la jonction entre les tronçons médians 7A. Ainsi, la section droite de chaque pièce additionnelle 12 est identique à la section droite de chaque tronçon médian 5A de rail et la section droite de chaque pièce additionnelle 13 est identique à la section droite de chaque tronçon médian 7A.

Chaque pièce additionnelle de rail s'insère entre deux tronçons médians de rail dans leur prolongement et en aboutement avec ces derniers. Chaque pièce est donc transversale au plan de jointoiement des structures de module ce qui assure le maintien des structures les unes contre les autres. Les pièces 12 seront fixées par vis sur les socles 2 tandis que les pièces 13 seront fixées sur les parois supérieures des caissons 3. Les structures d'extrémités gauche et droite de l'ensemble de rangement seront équipées de tronçons latéraux de rail.

L'ensemble tel que décrit est évolutif. Ainsi le dit ensemble tout comme le module de rangement peut être prolongé à gauche ou à droite par des structures de module livrées avec des pièces de rail et des caissons mobiles avant 4. Pour ce faire le tronçon latéral gauche ou droit de chaque rail, soit de l'ensemble, soit du module est retiré et après fixation de la structure additionnelle, soit à l'ensemble, soit au module et mise en place des caissons additionnels, est replacé sur la dite structure afin de constituer le tronçon terminal de rail.

Enfin il y a lieu de noter que l'ensemble de rangement peut être divisé en module unitaire ou bien en sous-ensembles. Dans ce but, les pièces additionnelles de rail sont retirées et des tronçons latéraux de rail mis en place aux extrémités des modules ou des sous-ensembles.

Il va de soi que la présente invention peut recevoir toutes variantes et tous aménagements sans pour autant sortir du cadre du présent brevet.

## Revendications

1. Structure de module de rangement caractérisée en ce qu'elle est constituée par un caisson de rangement arrière (3), fixe avec ouverture frontale et par au moins un tronçon médian (5A), (7A) de rail de guidage destiné à recevoir au moins un caisson de rangement (4) avant, mobile face à l'ouverture frontale du caisson arrière.

2. Structure de module de rangement selon la revendication 1 caractérisée par un socle (2) d'appui au sol recevant sur sa zone arrière le caisson fixe (3) et sur sa zone avant le tronçon médian (5A) de rail de guidage du ou des caissons avant (4) le dit tronçon de rail de guidage étant parallèle à l'ouverture frontale du caisson arrière (3).

3. Structure de module de rangement selon la revendication 1 ou la revendication 2 caractérisée en ce que le tronçon médian (7A) de rail est fixé en partie haute de la dite structure et s'étend parallèlement à l'ouverture frontale du caisson arrière.

4. Structure de module de rangement selon les revendications 2 et 3 prises ensembles caractérisée par un tronçon médian (5A) de rail inférieur de guidage monté en fixation sur le socle (2) et par un tronçon médian (7A) de rail supérieur de guidage monté en partie haute de la dite structure.

5. Structure de module de rangement selon la revendication 3 ou la revendication 4 caractérisée en ce que le tronçon médian (7A) de rail est fixé sur le caisson arrière (3) sur la paroi supérieure de ce dernier.

**6.** Module de rangement caractérisé en ce qu'il comprend une structure selon l'une quelconque des revendications précédentes, au moins un caisson avant (4) mobile et au moins un rail horizontal (5), (7) de guidage du ou des caissons avant mobiles, le dit rail de guidage étant constitué par le tronçon médian de rail (5A), (7A) et par deux tronçons de rail latéraux (5B), (7B), amovibles montés dans le prolongement du tronçon médian, de part et d'autre de ce dernier, les dits tronçons latéraux comportant chacun suivant leur extrémité la plus éloignée du tronçon médian une butée (6), (8) pour limiter le mouvement et s'opposer à l'extraction du ou des caissons avant (4) de leur rail.

**7.** Module de rangement selon la revendication 6 caractérisé en ce que les tronçons de rail latéraux (5B), (7B) sont dans le prolongement axial de leur tronçon médian de rail

**8.** Module de rangement selon la revendication 6 caractérisé par un rail de guidage inférieur (5) monté en fixation sur la partie avant du socle (2) de la structure et s'étendant parallèlement à l'ouverture frontale du caisson arrière.

**9.** Module de rangement selon la revendication 6 caractérisé par un rail de guidage supérieur (7) fixé en partie haute de la structure, le ou les caissons avant (4) étant suspendus au dit rail de guidage.

**10.** Module de rangement selon la revendications 8 caractérisé par un rail inférieur (5) fixé sur la zone avant du socle parallèlement à l'ouverture frontale du caisson arrière (3) et par un rail supérieur (7) parallèle à l'ouverture frontale du caisson arrière et monté en fixation en partie haute de la structure, le ou les caissons mobiles avant (4) étant guidés par les dits rails.

**11.** Module de rangement selon la revendication 9 ou la revendication 10 caractérisé en ce que le rail supérieur (7) est fixé sur la paroi supérieure du caisson arrière.

**12.** Module de rangement selon la revendication 10 caractérisé en ce que le ou les caissons avant (4) est ou sont portés et guidés par le rail inférieur (5) et guidés seulement par le rail supérieur (7)

**13.** Module de rangement selon la revendication 10 caractérisé en ce que le ou les caissons avant (4) est ou sont portés et guidés par le rail supérieur (7) et guidés seulement par le rail inférieur (5).

**14.** Module de rangement selon l'une quelconque des revendications 6, 7, 8, 10, 12, 13 caractérisé en ce que les tronçons médians (5A) et latéraux (5B) du rail de guidage (5) sont constitués chacun par un profilé de section droite en U, les ailes du profilé étant tournées vers le haut.

**15.** Module de rangement selon l'une quelconque des revendications 6, 7, 9, 10, 11, 12, 13 caractérisé en ce que les tronçons médian (7A) et latéraux (7B) du rail de guidage (7) supérieur sont constitués chacun par profilé de section droite en U, les ailes du profilé étant tournées vers le haut.

**16.** Module de rangement selon la revendication 6 ou la revendication 15 caractérisé en ce que chaque caisson de rangement avant (4) est équipé en partie supérieure d'une platine horizontale (9) s'étendant au dessus du rail supérieur (7) de guidage, ladite platine horizontale (9), au dessus dudit rail (7) étant équipée d'au moins un pivot vertical (10) sur lequel est monté de manière libre en rotation et fixe en translation un galet de roulement (11) assujetti à rouler dans le rail de guidage supérieur (7).

**17.** Ensemble de rangement caractérisé en ce qu'il est constitué par au moins deux structures selon l'une quelconque des revendications 1 à 5 accolées l'une à l'autre et liées l'une à l'autre par au moins une pièce de rail disposée entre le tronçon médian de rail de l'une et le tronçon de rail médian de l'autre, dans leur prolongement, et en aboutement avec ces derniers, ladite pièce de rail étant transversale au plan de jointoiement entre les dites structures et étant fixée à ces dernières, le dit ensemble étant équipé d'au moins un caisson mobile avant (4), d'au moins un tronçon latéral gauche de rail fixé à la structure de module d'extrémité gauche dans le prolongement du tronçon médian de rail de la dite structure, en aboutement avec ce dernier et à sa gauche et d'au moins un tronçon latéral droit de rail fixé à la structure de module d'extrémité droite dans le prolongement du tronçon médian de rail de la dite structure, en aboutement avec ce dernier et à sa droite.

Fig.1

Fig.2

Fig.3

Fig.4

7B    7    7B

3

4

4

2

5

Fig.5

3

6

5B

5A

5

2

Fig.6

Fig.7

Fig.8

Fig.9

EP 0 705 548 A2

Fig.10

EP 0 705 548 A2